# EUROPÄISCHE PATENTSCHRIFT

(11) **EP 1 979 661 B1**
(45) Veröffentlichungstag und Bekanntmachung des Hinweises auf die Patenterteilung: **25.05.2011**
(21) Anmeldenummer: 07702456.0
(22) Anmeldetag: 26.01.2007
(51) Int. Cl.: F16K 47/02

(54) **VENTIL**
VALVE
SOUPAPE

(30) Priorität: 30.01.2006 DE 102006004457; 03.02.2006 DE 102006005411
(43) Veröffentlichungstag der Anmeldung: 15.10.2008
(73) Patentinhaber: Danfoss A/S, DK-6430 Nordborg (DK)
(72) Erfinder: MOLBAEK, Jens Jorgen, DK-6430 Nordborg (DK)
(86) Internationale Anmeldenummer: PCT/DK2007/000037
(87) Internationale Veröffentlichungsnummer: WO 2007/085261

(56) Entgegenhaltungen:
- DE-A1- 4 427 846
- DE-A1- 10 336 916
- DE-U- 1 709 747

## Beschreibung

Die Erfindung betrifft ein Ventil gemäß den im Oberbegriff von Anspruch 1 definierten Merkmalen, wie es beispielsweise aus DE-A-44 27 846 bekannt ist.

Ein weiteres Ventil ist aus DE 103 36 916 A1 bekannt.

Die Dämpfungseinrichtung ist hier durch eine konisch ausgebildete Feder gebildet, an der ein mit dem Ventilelement verbundener Anschlag zur Anlage kommt, kurz bevor das Ventilelement den Ventilsitz erreicht. In einer größeren Entfernung hat die Feder hingegen keine Wirkung auf die Verlagerung des Ventilelements. Mit der Feder wird kurz vor Erreichen des Ventilsitzes die Kraft erhöht, die man zur Verlagerung des Ventilelements benötigt. Damit kann man bei niedrigen Durchflußraten eine genauere Steuerung erzielen.

Die Erfindung betrifft insbesondere ein Regelventil. Ein bevorzugter Anwendungszweck der Erfindung ist die Verwendung eines derartigen Regelventils auf der Primärseite eines Wärmetauschers, um den primärseitigen Strom eines Wärmeträgerfluids in Abhängigkeit von Temperaturen an anderer Stelle, beispielsweise auf der Sekundärseite, zu regeln.

Der Erfindung liegt die Aufgabe zugrunde, eine stabile Steuerung eines Fluids bei niedrigen Durchflußraten zu erzielen.

Diese Aufgabe wird bei einem Ventil der eingangs genannten Art durch die kennzeichnenden Merkmale von Anspruch 1 gelöst.

Erfindungsgemäß liegt das Element zumindest einseitig an einer Fläche an, die quer zur Bewegungsstrecke ein vorbestimmtes Profil aufweist. Die Fläche weicht also von einer Ebene ab, auf der die Bewegungsrichtung des Ventilelements senkrecht steht. Durch die Profilierung der Fläche wird eine weitere Einflußmöglichkeit geschaffen, wie man die Verformung des Elements aus elastomerem Material gestalten kann, um eine überproportionale Kraftzunahme bei der Annäherung des Ventilelements an den Ventilsitz zu erzielen.

Man verwendet als Dämpfungseinrichtung, die man auch als "Gegenkrafterzeugungseinrichtung" oder "Bremseinrichtung" bezeichnen kann, nicht mehr eine herkömmliche Feder, sondern ein elastomeres Element. Die Feder- oder Rückstellwirkung dieses Elements ergibt sich aus dem elastomeren Material, aus dem das Element gebildet ist. Spätestens dann, wenn sich das Ventilelement bis auf einen vorbestimmten Abstand dem Ventilsitz angenähert hat, kommt der erste mit dem Ventilelement verbundene Anschlag zur Anlage an das Element aus elastomerem Material und beginnt bei einer weiteren Bewegung des Ventilelements auf den Ventilsitz zu das elastomere Element zu komprimieren. Je stärker das elastomere Element komprimiert wird, desto mehr Kraft ist für die Kompression erforderlich. Die Zunahme der Kraft ist dabei in nicht linearer Weise abhängig von dem Bewegungsweg des Ventilelements. Dadurch läßt sich eine progressive Ventilkennlinie erreichen. Bei kleinen Durchflußmengen, also bei einem kleinen Abstand zwischen Ventilelement und Ventilsitz, steigen die für eine Schließbewegung des Ventilelements erforderlichen Kräfte überproportional an. Damit läßt sich eine relativ stabile Steuerung des Durchflusses erzielen. Man benötigt bei niedrigen Durchflußraten eine größere Temperaturänderung für eine Durchflußänderung.

Hierbei ist bevorzugt, daß das Element als Ring ausgebildet ist, der eine Ventilspindel umgibt, an der das Ventilelement angeordnet ist. Damit wird sozusagen eine Verliersicherung für das Element aus elastomerem Material erzeugt. Die Ventilspindel kann sich zwar in Bewegungsrichtung gegenüber dem Ring bewegen. Der Ring kann aber nicht quer zur Bewegungsrichtung des Ventilelements von der Ventilspindel entfernt werden. Vorzugsweise weist das Element einen Querschnitt auf, dessen Breite sich in eine Richtung parallel zur Bewegungsstrecke des Ventilelements verändert. Dies führt dazu, daß man bei einer zunehmenden Kompression des Elements aus elastomerem Material im Grunde immer mehr Material komprimieren muß, so daß die für die Komprimierung des elastomeren Materials notwendigen Kräfte überproportional ansteigen.

Dies gilt insbesondere dann, wenn der Querschnitt kreis- oder ellipsenförmig ausgebildet ist. Bei Verwendung eines kreisförmigen Querschnitts wird der Kreis sozusagen plattgedrückt, wenn das Element komprimiert wird. Es liegt auf der Hand, daß in diesem Fall die Kraftzunahme überproportional zur Bewegungsstrecke des Ventilelements ist.

Vorzugsweise ist die Fläche an einer Scheibe ausgebildet, die die Ventilspindel umgibt. Damit läßt sich die Ventilspindel frei gegenüber der Fläche in Bewegungsrichtung bewegen. Die Fläche ist aber unverlierbar an der Position gehalten, wo sie mit dem Element aus elastomerem Material zusammenwirken soll.

Vorzugsweise ist die Fläche durch zwei geneigte Teilflächen gebildet, die entlang einer Firstlinie zusammenstoßen. Die Fläche ist also nach Art eines Satteldachs ausgebildet. Das Element aus elastomerem Material wird dann bei einer Druckbeaufschlagung nicht nur komprimiert, sondern auch seitlich verlagert. Die Teilflächen können den gleichen Neigungswinkel aufweisen.

Alternativ ist die Fläche nach Art eines Konus ausgebildet. Dies führt insbesondere bei Verwendung eines Ringes als Element aus elastomerem Material dazu, daß der Ring nicht nur komprimiert, sondern auch in Radialrichtung verformt wird. Der Ring wird also nicht nur komprimiert, sondern auch in radialer Richtung gedehnt oder gestaucht. Auch die hierfür erforderlichen Kräfte müssen bei der Bewegung der Ventilspindel und des Ventilelements mit aufgebracht werden.

Vorzugsweise ragt der Konus mit seinem spitzen Ende in den Ring hinein. Dies ergibt den zusätzlichen Vorteil, daß der Ring gegenüber der Fläche zentriert wird. Die Kräfte, die in der Umgebung der Ventilspindel als Reaktionskräfte durch das Element aus elastomerem Material erzeugt werden, verteilen sich also in Umfangsrichtung relativ gleichmäßig.

In einer bevorzugten Ausgestaltung ist vorgesehen, daß die Scheibe zwischen zwei Elementen aus elastomerem Material angeordnet ist. Damit verdoppelt sich sozusagen die "Federreserve" eines Elements, so daß man einen längeren Abschnitt der Bewegungsstrecke erhält, über den das Ventilelement mit der Dämpfungseinrichtung zusammenwirkt. Allerdings benötigt man nur eine einzelne Scheibe, so daß der für die Vergrößerung des Federwegs notwendige Aufwand nicht verdoppelt wird.

Dies gilt insbesondere dann, wenn die Scheibe für jedes Element quer zur Bewegungsstrecke ein vorbestimmtes Profil aufweist. In diesem Fall wirkt das Profil auf beide Elemente aus elastomerem Material.

Vorzugsweise ist der zweite Anschlag im Ventilgehäuse verstellbar. Mit der Verstellung des Anschlags wird zum einen der Punkt bestimmt, an dem das Ventilelement mit der Dämpfungseinrichtung zusammenzuwirken beginnt. Zum anderen wird die Kraft bestimmt, die notwendig ist, um das Ventilelement zur Anlage an den Ventilsitz zu bringen. Diese Kraft ist um so größer, je weiter der zweite Anschlag vom Ventilsitz weg verlagert wird.

Vorzugsweise wirkt der zweite Anschlag mit einer die Ventilspindel umgebenden Hülse zusammen, die mit dem Ventilgehäuse über eine Gewindepaarung verbunden ist. In diesem Fall wird die Verstellung des zweiten Anschlags stark vereinfacht. Man muß lediglich die Hülse im Ventilgehäuse verdrehen. Der zweite Anschlag kann fest mit der Hülse verbunden sein. In den meisten Fällen wird es aber ausreichen, wenn der zweite Anschlag in Bewegungsrichtung des Ventilelements auf den Ventilsitz zu von der Hülse unterstützt wird. Dies vereinfacht die Konstruktion.

Bevorzugterweise ist vorgesehen, daß die Ventilspindel einen vieleckigen Querschnitt aufweist, der dem Innenquerschnitt der Hülse entspricht. Mit dem Verdrehen der Ventilspindel läßt sich die Hülse im Ventilgehäuse verdrehen.

Auch ist von Vorteil, wenn das Ventilelement unter der Wirkung einer Antriebseinrichtung verlagerbar ist, die ein Temperatur-Druck-Verhalten aufweist. In diesem Fall wird die Position des Ventilelements durch ein Kraftgleichgewicht bestimmt, wobei die Dämpfungseinrichtung zumindest auf einem Teil der Bewegungsstrecke des Ventilelements, vorzugsweise im Bereich kurz vor dem Schließen des Ventils, mit Einfluß auf die herrschenden Kräfte nimmt. Ein Temperatur-Druck-Verhalten läßt sich beispielsweise durch ein Thermostatelement mit Gasfüllung realisieren.

Die Erfindung wird im folgenden anhand eines bevorzugten Ausführungsbeispiels in Verbindung mit der Zeichnung beschrieben. Hierin zeigen:
- Fig. 1: eine schematische Darstellung eines Regelventils und
- Fig. 2: einen vergrößerten Ausschnitt aus dem Regelventil.

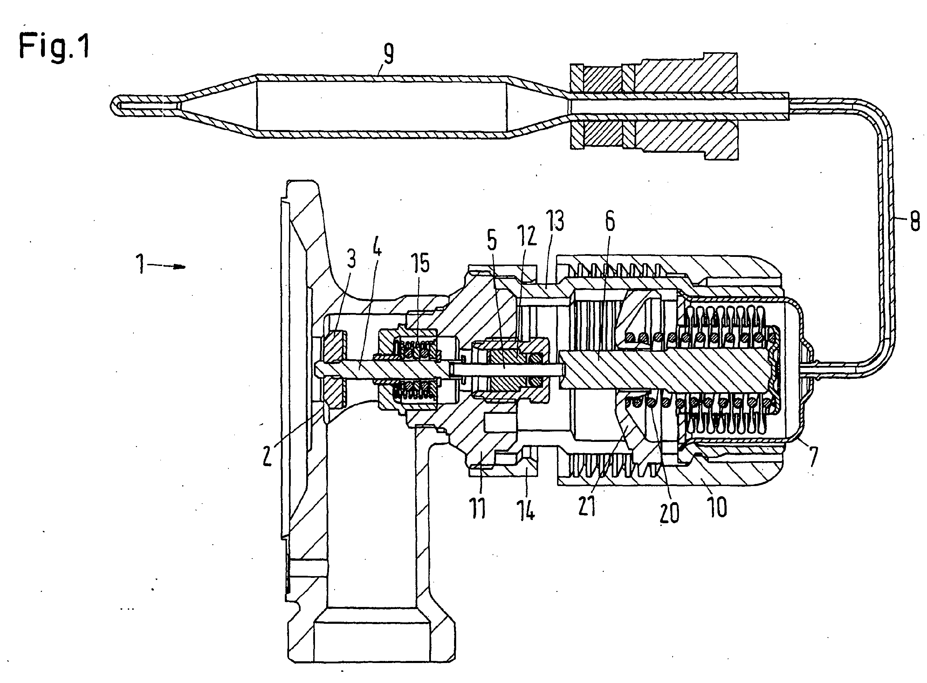

Fig. 1 zeigt in einer schematischen Schnittdarstellung ein Regelventil 1, wie es beispielsweise auf der Primärseite eines nicht näher dargestellten Wärmetauschers eingesetzt werden kann, um einen Strom von Wärmeträgerfluid durch die Primärseite des Wärmetauschers zu regeln.

Das Regelventil 1 weist einen Ventilsitz 2 auf, mit dem ein Ventilelement 3 zusammenwirkt. Die Entfernung des Ventilelements 3 vom Ventilsitz 2 hat einen Einfluß auf die Menge eines Fluids, die durch das Regelventil 1 hindurchströmen kann. Wenn das Ventilelement 3 am Ventilsitz 2 anliegt, dann ist der Durchfluß des Fluids unterbrochen.

Das Ventilelement 3 ist an einer Ventilspindel 4 befestigt. Die Ventilspindel 4 steht über einen Betätigungsstift 5 in Druckverbindung mit einem Stößel 6, der seinerseits von einem Balgenelement 7 beaufschlagt wird. Das Balgenelement 7 steht über eine Kapillarleitung 8 in Verbindung mit einem Temperaturfühler 9. Der Temperaturfühler 9, die Kapillarleitung 8 und das Balgenelement 7 sind mit einer Füllung versehen, deren Druck sich bei einer Temperaturänderung ändert, beispielsweise einer Gasfüllung. Insbesondere vergrößert die Füllung ihren Druck mit steigender Temperatur. Eine Druckvergrößerung bewirkt, daß der Stößel 6 weiter aus dem Balgenelement 7 herausgedrückt wird und das Ventil-lement 3 damit näher an den Ventilsitz 2 heranbewegt wird. Typischerweise wird ein derartiges Verhalten durch eine gasförmige Füllung bewirkt. Ein Sollwert für eine mit Hilfe des Balgenelements thermostatisch einstellbare Temperatur kann mit Hilfe eines Handgriffs 10 verändert werden, der auf ein Ventilgehäuse 11 aufgeschraubt ist. Das Ventilelement 3 nimmt dann eine Stellung ein, bei der die vom Balgenelement 7 ausgeübte Kraft im Gleichgewicht steht mit allen anderen Kräften, die beispielsweise durch Federn hervorgerufen werden, die in die entgegengesetzte Richtung wirken. Der Durchfluß durch das Regelventil 1 ist also eine Funktion der am Temperaturfühler herrschenden Temperatur.

Der Betätigungsstift 5 ist durch eine Stopfbuchse 12 geführt. Ein das Balgenelement 7 aufnehmender Gehäuseteil 13 ist mit Hilfe einer Überwurfmutter 14 am Ventilgehäuse 11 befestigt.

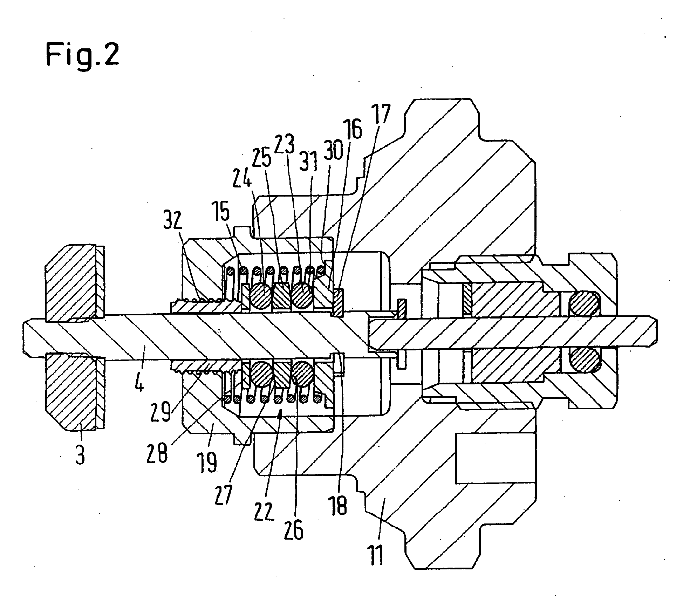

Wie insbesondere aus Fig. 2 zu erkennen ist, wirkt auf die Ventilspindel 4 in Öffnungsrichtung eine Hilfsfeder 15, die als Schraubendruckfeder ausgebildet ist. Hierzu ist an der Ventilspindel 4 ein Anschlagring 16 angeordnet, der mit einem Federring 17 zusammenwirkt, der in eine Nut 18 an der Ventilspindel 4 eingesetzt ist, und an dem die Hilfsfeder 15 anliegt. Im übrigen stützt sich die Hilfsfeder 15 an einem Einsatz 19 ab, der in das Ventilgehäuse 11 eingeschraubt ist und der Einfachheit halber als Bestandteil des Ventilgehäuses 11 angesehen wird.

Der Stößel 6 ist (Fig. 1) von einer Feder 20 umgeben, die sich an einem Federträger 21 abstützt, der im Gehäuseteil 13 drehfest, aber axial verschiebbar gehalten ist. Der Federträger 21 kann durch Drehen des Handgriffs 10 verlagert werden. Mit der Verlagerung ändert sich die Kraft der Feder 10 auf das Balgenelement 7. Durch die Verlagerung des Federträgers 21 läßt sich der obengenannte Sollwert einstellen, wie dies an sich bekannt ist

Die Ventilspindel 4, der Betätigungsstift 5 und der Stößel 6 liegen lediglich aneinander an, d.h. sie sind auf Druck zueinander belastbar. Wenn die Kraft der Feder 20 den im Balgenelement 7 herrschenden Druck übersteigt, dann kann die Ventilspindel 4 unter der Wirkung der Hilfsfeder 15 dem Stößel 6 folgen und das Ventil-element 3 vom Ventilsitz 2 entfernen.

Wie insbesondere aus Fig. 2 zu erkennen ist, ist die Ventilspindel 4 an einem Teil ihrer Länge von einer Dämpfungseinrichtung 22 umgeben. Die Dämpfungseinrichtung 22 kann auch als "Gegenkrafterzeugungseinrichtung" oder "Bremseinrichtung" bezeichnet werden.

Die Dämpfungseinrichtung 22 weist zwei O-Ringe 23, 24 auf, die beide so angeordnet sind, daß sie die Ventilspindel 4 mit einem kleinen radialen Abstand umgeben. Zwischen den beiden O-Ringen 23, 24 ist eine Scheibe 25 angeordnet, die die Ventilspindel 4 ebenfalls mit Abstand umgibt.

Die Scheibe 25 weist ein Profil auf. Sie ist in der Mitte dicker als am Rand. Dies kann auf unterschiedliche Arten realisiert werden. In einem Ausführungsbeispiel sind ihre beiden Stirnseiten 26, 27 nach Art eines flachen Konus ausgebildet, wobei sich die "Spitze" des Konus jeweils in die beiden O-Ringe 23, 24 hinein erstreckt. In einer anderen bevorzugten Ausgestaltung sind die beiden Stirnseiten 26, 27 jeweils durch zwei ebene Flächen gebildet, die an einer Firstlinie zusammentreffen. Je nach der Richtung, aus der man die Scheibe 25 betrachtet, sieht man also eine aus zwei Dreiecken zusammengesetzte Raute oder ein Rechteck.

Die Dämpfungseinrichtung 22 hat parallel zur Längserstreckung der Ventilspindel 4, also parallel zur Bewegungsrichtung der Ventilspindel 4, eine begrenzte Ausdehnung. Wenn sich die Ventilspindel 4 mit dem Ventilelement (bezogen auf die Darstellung der Fig. 2) weiter nach rechts bewegt, dann hebt der Anschlagring 16 von dem rechten O-Ring 23 ab, ohne daß sich die axiale Länge der Dämpfungseinrichtung 22 weiter vergrößert. Die Dämpfungseinrichtung 22 übt also nur auf einem Teil der Bewegungsstrecke des Ventilelements 3 eine Kraft auf die Ventilspindel 4 und damit auf das Ventilelement 3 aus.

Auf der dem Anschlagring 16 gegenüberliegenden Seite ist der O-Ring 24 durch eine Anschlagscheibe 28 unterstützt, die an einer Hülse 29 anliegt, die die Ventilspindel 4 umgibt und in das Ventilgehäuse 11, genauer gesagt den Einsatz 19, eingeschraubt ist. Ein entsprechendes Gewinde 32 ist schematisch dargestellt. Wenn man die Hülse 29 gegenüber dem Ventilgehäuse 11 verdreht, dann ändert sich die Lage der Anschlagscheibe 28 und damit auch die Kraft, die notwendig ist, um das Ventilelement 3 zur Anlage an den Ventilsitz 2 zu bringen. Je weiter die Hülse 29 in das Ventilgehäuse 11 hineingeschraubt worden ist, desto stärker muß die Dämpfungseinrichtung 22 komprimiert werden, um das Ventilelement 3 am Ventilsitz 2 zur Anlage zu bringen.

Die Ventilspindel 4 ist vieleckig, beispielsweise sechseckig. Die Hülse 29 weist einen daran angepaßten Innenquerschnitt auf, so daß die Ventilspindel 4 zwar in der Hülse 29 verschoben, aber nicht gegenüber der Hülse 29 verdreht werden kann. Wenn man die Ventilspindel 4 dreht, dann wird die Hülse 29 mitgedreht und ändert damit ihre axiale Lage im Ventilgehäuse 11. Die Ventilspindel 4 läßt sich beispielsweise verdrehen, wenn man die Stopfbuchse 12 entfernt. Man kann dann das Ventilgehäuse 11 mit Ventilspindel 4 und Dämpfungseinrichtung 22 in einen Teststand einsetzen und beim Verdrehen der Ventilspindel 4 die von der Dämpfungseinrichtung 22 ausgeübte Reaktionskraft messen, um die richtige Position der Hülse 29 einzustellen.

Bei der Kompression der Dämpfungseinrichtung 22 ist es nicht nur erforderlich, die O-Ringe 23, 24 in Axialrichtung (bezogen auf die Achse der Ventilspindel 4) zusammenzudrücken. Aufgrund der Profilierung der Scheibe 25 werden die O-Ringe 23, 24 bei ihrer Kompression auch etwas radial gedehnt. Auch die zum Dehnen der O-Ringe 23, 24 erforderliche Kraft muß also aufgebracht werden, um das Ventilelement 3 an den Ventilsitz 2 annähern zu können.

Der Anschlagring 16 weist eine erste Anschlagfläche 30 auf, an der die Hilfsfeder 15 anliegt, und eine zweite Anschlagfläche 31, die mit der Dämpfungseinrichtung 22 zusammenwirkt. Die Hilfsfeder 15 umgibt also die Dämpfungseinrichtung 22 und dient dazu, die Öffnungsbewegung des Ventilelements 3 zu unterstützen.

In Schließrichtung wirkt im Grunde nur die Kraft auf das Ventilelement 3, die vom Balgenelement 7 aufgebracht wird, also die Kraft, die durch eine temperaturbedingte Druckänderung der Füllung des Balgenelements 7 bewirkt wird.

In Öffnungsrichtung wirken mehrere Kräfte. Dabei handelt es sich um die Kraft, die von der Feder 20 aufgebracht wird, die Kraft, die von der Eigenelastizität des Materials des Balgenelements 7 erzeugt wird, und die Kraft, die von dem durch den Ventilsitz 2 hindurch anstehenden Fluid aufgebracht wird. Im Schließzustand wirkt darüber hinaus die Kraft, die man durch ein geringfügiges Zusammendrücken des Ventilelements 3 aufgebracht hat.

Solange der Anschlagring 16 mit der Dämpfungseinrichtung 22 zusammenwirkt, wirkt in Öffnungsrichtung auch die Rückstellkraft, die von der Dämpfungseinrichtung 22 erzeugt wird. Diese Kraft in Öffnungsrichtung entfällt allerdings, wenn der Anschlagring 16 von der Dämpfungseinrichtung 22 abgehoben hat.

Die von der Dämpfungseinrichtung 22 hervorgerufene Rückstell- oder Dämpfungskraft läßt sich auf vielerlei Art verändern. Ein Einflußfaktor ist die Wahl des elastomeren Materials, aus dem die O-Ringe 23, 24 gebildet sind. Ein anderer Einflußfaktor ist die Steigung des Konus oder der Schrägfläche an den Stirnseiten 26, 27 der Scheibe 25. Auch die Dicke der O-Ringe 23, 24 parallel zur Bewegungsrichtung der Ventilspindel 4 spielt eine Rolle.

Der Querschnitt der O-Ringe 23, 24 muß nicht unbedingt kreisförmig sein, auch wenn dies die einfachste Ausgestaltung ist. Zweckmäßig und vorteilhaft ist es allerdings, wenn die O-Ringe 23, 24 nicht über ihre gesamte radiale Erstreckung die gleiche Dicke haben, was sich sehr einfach durch die Wahl des kreisförmigen Querschnitts realisieren läßt.

## Patentansprüche

1. Ventil mit einem Ventilsitz (2), einem mit dem Ventilsitz zusammenwirkenden Ventilelement (3), das in einem Ventilgehäuse (11) über eine vorbestimme Bewegungsstrecke verlagerbar ist, und einer Dämpfungseinrichtung (22), die zumindest auf einem Teil der Bewegungsatrecke auf das Ventilelement (3) wirkt, wobei die Dämpfungseinrichtung (22) mindestens ein Element (23, 24) aus elastomerem Material aufweist, das zwischen einem ersten, mit dem Ventilelement verbundenen Anschlag (16) und einem zweiten, mit dem Ventilgehäuse (11) verbundenen Anschlag (28) komprimierbar ist, **dadurch gekennzeichnet, daß** das Element (23, 24) zumindest einseitig an einer Fläche (26, 27) anliegt, die quer zur Bewegungsstrecke ein vorbestimmtes Profil aufweist, welches von einer senkrecht auf der Bewegungsrichtung des Ventilelements stehenden Ebene abweicht.

2. Ventil nach Anspruch 1, **dadurch gekennzeichnet, daß** das Element (23, 24) als Ring ausgebildet ist, der eine Ventilspindel (4) umgibt, an der das Ventilelement (3) angeordnet ist.

3. Ventil nach Anspruch 1 oder 2, **dadurch gekennzeichnet, daß** das Element (23, 24) einen Querschnitt aufweist, dessen Breite sich in eine Richtung parallel zur Bewegungsstrecke des Ventilelements (3) verändert.

4. Ventil nach Anspruch 3, **dadurch gekennzeichnet, daß** der Querschnitt kreis- oder ellipsenförmig ausgebildet ist.

5. Ventil nach einem der Ansprüche 1 bis 4, **dadurch gekennzeichnet, daß** die Fläche (26, 27) an einer Scheibe (25) ausgebildet ist, die die ventilspindel (4) umgibt.

6. Ventil nach einem der Ansprüche 1 bis 5, **dadurch gekennzeichnet, daß** die Fläche (26, 27) durch zwei geneigte Teilflächen gebildet ist, die entlang einer Firstlinie zusammenstoßen.

7. Ventil nach einem der Ansprüche 1 bis 6, **dadurch gekennzeichnet, daß** die Fläche (26, 27) nach Art eines Konus ausgebildet ist.

8. Ventil nach Anspruch 7, **dadurch gekennzeichnet, daß** der Konus mit seinem spitzen Ende in den Ring hineinragt.

9. Ventil nach einem der Ansprüche 5 bis 8, **dadurch gekennzeichnet, daß** die Scheibe (25) zwischen zwei Elementen (23, 24) aus elastomerem Material angeordnet ist.

10. Ventil nach Anspruch 9, **dadurch gekennzeichnet, daß** die Scheibe (25) für jedes Element (23, 24) quer zur Bewegungsstrecke das vorbestimmte Profil aufweist.

11. Ventil nach einem der Ansprüche 1 bis 10, **dadurch gekennzeichnet, daß** der zweite Anschlag (28) im Ventilgehäuse (11) verstellbar ist.

12. Ventil nach Anspruch 11, **dadurch gekennzeichnet, daß** der zweite Anschlag (28) mit einer die Ventilspindel (4) umgebenden Hülse (29) zusammenwirkt, die mit dem Ventilgehäuse (11) über eine Gewindepaarung (32) verbunden ist.

13. Ventil nach Anspruch 12, **dadurch gekennzeichnet, daß** die Ventilspindel (4) einen vieleckigen Querschnitt aufweist, der dem Innenquerschnitt der Hülse (29) entspricht.

14. Ventil nach einem der Ansprüche 1 bis 13, **dadurch gekennzeichnet, daß** das Ventilelement (3) unter der Wirkung einer Antriebseinrichtung (7) verlagerbar ist, die ein Temperatur-Druck-Verhalten aufweist.

## Claims

1. Valve with a valve seat (2), a valve element (3) interacting with the valve seat (2), the valve element (3) being movable in a valve housing (11) over a predetermined movement path, and a throttling arrangement (22) acting upon the valve element (3) on a part of the movement path, the throttling arrangement (22) comprising at least one element (23, 24) of an elastomeric material that is compressible between a first stop (16) connected to the valve element and a second stop (28) connected to the valve housing (11), **characterised in that** the element (23, 24) rests at least unilaterally on a surface (26, 27) that has a predetermined profile transversely to the movement path, said profile deviating from a plane that is perpendicular to the movement direction of the valve element.

2. Valve according to claim 1, **characterised in that** the element (23, 24) has the form of a ring that surrounds a valve spindle (4), on which the valve element (3) is arranged.

3. Valve according to claim 1 or 2, **characterised in that** the element (23, 24) has a cross-section, whose width changes in a direction which is parallel to the movement path of the valve element (3).

4. Valve according to claim 3, **characterised in that** the cross-section has the form of a circle or an ellipse.

5. Valve according to one of the claims 1 to 4, **characterised in that** the surface (26, 27) is formed on a disc (25) that surrounds the valve spindle (4).

6. Valve according to one of the claims 1 to 5, **characterised in that** the surface (26, 27) is formed by two inclined partial surfaces, which meet along a ridge line.

7. Valve according to one of the claims 1 to 6, **characterised in that** the surface (26, 27) has the form of a cone.

8. Valve according to claim 7, **characterised in that** the cone extends into the ring with its pointed end.

9. Valve according to one of the claims 5 to 8, **characterised in that** the disc (25) is arranged between to elements (23, 24) of an elastomeric material.

10. Valve according to claim 9, **characterised in that** for each element (23, 24), the disc (25) has the predetermined profile transversely to the movement path.

11. Valve according to one of the claims 1 to 10, **characterised in that** the second stop (28) is adjustable in the valve housing (11).

12. Valve according to claim 11, **characterised in that** the second stop (28) interacts with a sleeve (29) surrounding the valve spindle (4), said sleeve (29) being connected to the valve housing (11) via a threaded pair (32).

13. Valve according to claim 12, **characterised in that** the valve spindle (4) has a polygonal cross-section that corresponds to the inner cross-section of the sleeve (29).

14. Valve according to one of the claims 1 to 13, **characterised in that** the valve element (3) is displaceable under the influence of a driving arrangement (7) that has a temperature-pressure behaviour.

## Revendications

1. Vanne comprenant un siège de vanne (2), un élément de vanne (3) qui coopère avec le siège de vanne et qui est déplaçable dans un boîtier de vanne (11) sur un trajet de déplacement prédéterminé, et un système d'amortissement (22) qui agit sur au moins une partie du trajet de déplacement sur l'élément de vanne (3),
dans laquelle le système d'amortissement (22) comprend au moins un élément (23, 24) en matériau élastomère, qui peut être comprimé entre une première butée (16) reliée à l'élément de vanne et une seconde butée (28) reliée au boîtier de vanne (11),
**caractérisée en ce que** l'élément (23, 24) s'appuie au moins sur un côté contre une surface (26, 27) qui présente, transversalement au trajet de déplacement, un profil prédéterminé qui diffère d'un plan dressé perpendiculairement à la direction de déplacement de l'élément de vanne.

2. Vanne selon la revendication 1, **caractérisée en ce que** l'élément (23, 24) est réalisé sous forme d'une bague qui entoure une broche de vanne (4) sur laquelle est agencé l'élément de vanne (3).

3. Vanne selon la revendication 1 ou 2, **caractérisée en ce que** l'élément (23, 24) présente une section transversale dont la largeur varie dans une direction parallèle au trajet de déplacement de l'élément de vanne (3).

4. Vanne selon la revendication 3, **caractérisée en ce que** la section transversale est réalisée en forme de cercle ou en forme d'ellipse.

5. Vanne selon l'une des revendications 1 à 4, **caractérisée en ce que** la surface (26, 27) est réalisée sur un disque (25) qui entoure la broche de vanne (4).

6. Vanne selon l'une des revendications 1 à 5, **caractérisée en ce que** la surface (26, 27) est formée par deux surfaces partielles inclinées, qui se rencontrent le long d'une ligne de faîte.

7. Vanne selon l'une des revendications 1 à 6, **caractérisée en ce que** la surface (26, 27) est réalisée à la manière d'un cône.

8. Vanne selon la revendication 7, **caractérisée en ce que** le cône pénètre dans la bague par son extrémité pointue.

9. Vanne selon l'une des revendications 5 à 8, **caractérisée en ce que** le disque (25) est agencé entre deux éléments (23, 24) en matériau élastomère.

10. Vanne selon la revendication 9, **caractérisée en ce que** le disque (25) présente le profil prédéterminé pour chaque élément (23, 24) perpendiculairement au trajet de déplacement.

11. Vanne selon l'une des revendications 1 à 10, **caractérisée en ce que** la seconde butée (28) est réglable dans le boîtier de vanne (11).

12. Vanne selon la revendication 11, **caractérisée en ce que** la seconde butée (28) coopère avec une douille (29) qui entoure la broche de vanne (4) et qui est reliée au boîtier de vanne (11) via une paire d'éléments à pas de vis (32).

13. Vanne selon la revendication 12, **caractérisée en ce que** la broche de vanne (4) présente une section transversale polygonale, qui correspond à la section transversale intérieure de la douille (29).

14. Vanne selon l'une des revendications 1 à 13, **caractérisée en ce que** l'élément de vanne (3) est déplaçable sous l'action d'un moyen d'entraînement (7) qui présente un comportement température/pression.
